# EUROPÄISCHE PATENTSCHRIFT

(11) **EP 1 819 235 B1**
(45) Veröffentlichungstag und Bekanntmachung des Hinweises auf die Patenterteilung: **05.05.2010**
(21) Anmeldenummer: 05793997.7
(22) Anmeldetag: 24.10.2005
(51) Int. Cl.: A23K 1/00, A23K 1/18, A23N 17/00

(54) **VERFAHREN ZUR HERSTELLUNG VON FUTTERMITTELN**
FEEDSTUFF PRODUCING METHOD
PROCEDE DE PRODUCTION D'ALIMENTS POUR ANIMAUX

(30) Priorität: 18.11.2004 DE 102004055792
(43) Veröffentlichungstag der Anmeldung: 22.08.2007
(73) Patentinhaber: Bühler AG, 9240 Uzwil (CH)
(72) Erfinder: WÜEST, Urs, CH-9302 Kronbühl (CH); BRÖRING, Heinrich, 49413 Dinklage (DE)
(74) Vertreter: Wilming, Martin
(86) Internationale Anmeldenummer: PCT/CH2005/000622
(87) Internationale Veröffentlichungsnummer: WO 2006/053451

(56) Entgegenhaltungen:
- WO-A-03/081155
- IE-A1- 930 995

## Beschreibung

Die Erfindung betrifft ein Verfahren zur Herstellung von Futtermitteln, insbesondere pelletierter Futtermittel für Hühner oder Schweine.

Die EP-B-923877 beschreibt ein Verfahren zur Herstellung von granuliertem Tierfutter, wobei das Ausgangsmaterial zunächst erhitzt und nachfolgend pelletiert wird. Nach einer Kühlungs- und Trocknungsphase erfolgt eine Lagerung und Verpackung der Pellets. Bei einem ähnlichen Verfahren nach der IE-A-930995 folgen auf den Kühler ein Crumbler und eine Absiebung der Feinteile. Nach der EP-A-257996 werden Premix-Pellets mittels warmer Luft getrocknet und anschliessend gekühlt.

Bei einem Verfahren zur hygienisierenden thermischen Behandlung von Mehl gemäss WO 00/60958 werden insbesondere Futtermehle in einem ersten beheizbaren Batchmischer erwärmt und gelangen anschliessend direkt in einen Trockner/Kühler. Dem getrockneten und gekühlten Mehl können in einem zweiten, nachgeordneten Batchmischer Zusatzstoffe beigemischt werden.

Die DE-A-10105344 offenbart eine zweistufige Kühlung von Pellets oder dergleichen, bei der die Pellets in einer ersten Stufe vorgekühlt werden, wobei nur ca. 1/3 der gesamten Kühlzeit beansprucht wird, um die Pellets auf unter 60°C zu kühlen. Erst nach einem Sieben und/oder Brechen erfolgt die langsamere Nachkühlung.

Der Erfindung liegt die Aufgabe zugrunde ein Verfahren zur Herstellung von Futtermitteln zu entwickeln, mit dem insbesondere pelletierte Futtermittel für Hühner oder Schweine effizient und umweltbewusst nachbehandelt werden können. Die Lösung der Aufgabe erfolgt mit den Merkmalen des Patentanspruchs 1. Hierzu werden die Pellets direkt nach der Pelletpresse ohne wesentlichen Wärmeverlust nachkonditioniert und es erfolgt eine Zugabe unterschiedlicher Flüssigkeiten, zum Beispiel durch Auffeuchten oder Auffetten, insbesondere mit Fetten und/oder Enzymen. Erst anschliessend erfolgt ein Kühlen und ggf. Brechen der Pellets.

Vorteilhafte Ausgestaltungen sind in den Unteransprüchen offenbart.

Das Verfahren ermöglicht es Futterpellets warm und mit geringem Fettverlust zu befetten bzw. allgemein Flüssigkeitsmengen nahezu verlustfrei sowie unter hygienisierenden Bedingungen zuzugeben.

Eine weitere Aufgabe besteht darin, eine Einrichtung zur Durchführung des Verfahrens zur Herstellung von Futtermitteln zu schaffen. Diese Aufgabe ist mit den Merkmalen des Patentanspruchs 6 gelöst. Der Pelletpresse ist ein beheizbarer Nachbehälter nachgeordnet, in dem die Nachkonditionierung erfolgt. An diesen Nachbehälter schliesst ein beheizbarer Mischer an, der auch zu Beimischung von Flüssigkeiten geeignet ist. Vorteilhafte Ausgestaltungen sind in den zugehörigen Unteransprüchen offenbart.

Verfahren und Vorrichtung ermöglichen Energieeinsparungen beim Hygienisieren durch Nutzung der Reibungswärme während des Pelletiervorganges und durch Herabsetzung der Hygienisierungstemperatur infolge der längeren Verweilzeit, insbesondere im Verweiler. Möglich wird auch eine Geruchsverminderung in der Kühlerabluft und eine Senkung der Fettverluste durch die Abluft. Durch den Einsatz eines Vakuummischers vor dem Kühler werden die 70°C bis 90°C heissen Pellets vorgetrocknet und auf ca. 35°C bis 40°C gekühlt. Bei der Nachkühlung werden wesentlich weniger Geruchsstoffe freigesetzt. Übliche Fett- oder Ölverluste von 0,2-1,0% können entscheidend vermindert werden. Auf zusätzliche Anlagen zur Geruchsminderung, zum Beispiel Nasswäscher kann ggf. verzichtet werden.

Mittels Fettzugabe im Vakuummischer kann die Fettmenge erhöht werden, die Eindringtiefe von Fett in die ca. 40°C warmen Pellets steigt und die Rezeptkosten sinken.

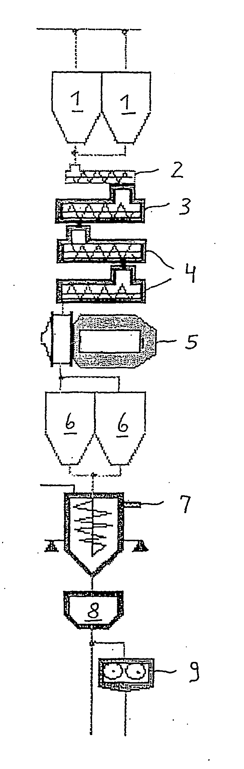

Die Erfindung wird nachfolgend in einem Ausführungsbeispiel anhand einer Zeichnung näher beschrieben. Die Zeichnung zeigt in einer Figur einen Teil einer Futtermühle mit einer Pelletpressenanlage. Hergestellt werden soll ein Broilerfutter (Pellets von ca. 3,0 - 3, 2 mm Durchmesser).

Die Pelletpressenanlage enthält mindestens ein Silo 1 für die vorbereiteten und gemischten Ausgangsprodukte für Futterpellets. Dem Silo 1 sind ein Dosierer 2, ein Dampfkonditionierer 3 und ein bis zwei Verweiler 4 nachgeordnet, gefolgt von einer Pelletpresse 5, wie dies in der WO 03/081155 der Anmelderin offenbart ist.

Dem Produktausgang der Pelletpresse 5 ist ein beheizbarer Nachbehälter 6 nachgeordnet, auf den ein ebenfalls beheizbarer Mischer 7, zum Beispiel ein Vertikalmischer folgt, der die Möglichkeit bietet, den Pellets insbesondere nichtwässrige Flüssigkeiten zuzuführen. Dieser Mischer kann auch geeignet sein, als Vakuumcoater oder als Trockner, zum Beispiel als Vakuumtrockner zu fungieren, resp. als solcher ausgebildet sein.

Der Mischer 7 ist weiterhin bevorzugt auf Wägeelementen abgestützt.

Auf den Mischer 7 folgt ein üblicher Kühler 8 und anschliessend ein Würfelbrecher 9.

Bei Bedarf können auch zwei oder mehrere derartige Einrichtungen angeordnet sein. Beim Abkühlen kann den Pellets zugleich wässrige Feuchte entzogen werden.

Die in der Pelletpresse 5 hergestellten Pellets gelangen ohne Temperaturverlust direkt in den Nachbehälter 6, wo sie zumindest unter Beibehaltung der Pellettemperatur hygienisiert bzw. nachkonditioniert und zwischengelägert werden, bis der Mischer 7 ein nächstes Batch aufnehmen kann. Im Mischer 7 kann eine Zugabe von Flüssigkeiten, einschliesslich von Fetten erfolgen. Die Auffettung kann bis zu 10% betragen.

Durch den Einsatz eines Vakuummischers (7) vor dem Kühler 8 werden die ca. 70-90°C heissen Pellets vorgetrocknet und auch ca. 35-40°C gekühlt. Bei der anschliessenden Nachkühlung im Kühler 8, insbesondere einem Gegenstromkühler werden wesentlich weniger Geruchsstoffe als beim Stand der Technik freigesetzt, die Menge an Abluft wird reduziert und Öl- und Fettverluste werden entscheidend vermindert.

## Patentansprüche

1. Verfahren zur Herstellung von Futtermitteln, insbesondere pelletierter Futtermittel für Hühner oder Schweine, wobei die Ausgangsstoffe vor der Pelletierung gemischt und konditioniert werden und die entstandenen Pellets gekühlt werden, **dadurch gekennzeichnet, dass** die Pellets unmittelbar anschliessend auf die Pelletierung nachkonditioniert resp. hygienisiert werden und anschliessend im noch warmen Zustand durch Flüssigkeitszugaben behandelt resp. ergänzt werden.

2. Verfahren nach Anspruch 1, **dadurch gekennzeichnet, dass** die nachkonditionierten und aufgefeuchteten, insbesondere mit Fett und/oder Enzymen aufgefetteten Pellets getrocknet und gekühlt werden.

3. Verfahren nach Anspruch 1 oder 2, **dadurch gekennzeichnet, dass** Nachkonditionierung und Auffeuchtung in jeweils beheizbaren Behältnissen erfolgen.

4. Verfahren nach mindestens einem der Ansprüche 1 bis 3, **dadurch gekennzeichnet, dass** Nachkonditionierung und Auffeuchtung zumindest unter Beibehaltung der Temperatur der Pellets erfolgt, die sie beim verlassen der Pelletpresse (5) aufweisen.

5. Verfahren nach mindestens einem der Ansprüche 1 bis 4, **dadurch gekennzeichnet, dass** die Auffeuchtung der Pellets während eines Mischvorganges erfolgt.

6. Einrichtung zur Herstellung von Futtermitteln, insbesondere pelletierter Futtermittel, geeignet zur Ausübung eines Verfahrens nach den Ansprüchen 1 bis 5 mit einer Pelletpresse (5), der zumindest ein Dosierer (2) und ein Konditionierer vorgeschaltet und ein Trockner und ein Kühler nachgeordnet sind, **dadurch gekennzeichnet, dass** auf die Pelletpresse (5) ein Nachbehälter (6) und ein Mischer (7) folgen.

7. Einrichtung nach Anspruch 6, **dadurch gekennzeichnet, dass** Nachbehälter (6) und Mischer (7) beheizbar sind.

8. Einrichtung nach Anspruch 6 oder 7, **dadurch gekennzeichnet, dass** der Mischer (7) zur Zugabe von Flüssigkeiten und/oder zum Trocknen der Pellets ausgebildet ist.

9. Einrichtung nach mindestens einem der Ansprüche 6 bis 8, **dadurch gekennzeichnet, dass** der Mischer (7) als Vakuummischer resp. Vakuumcoater ausgebildet ist.

## Claims

1. Method for the production of feedstuffs, in particular pelletized feedstuffs for hens or pigs, the starting materials being mixed and conditioned before pelletization, and the pellets obtained being cooled, **characterized in that** the pellets are reconditioned or hygienized immediately after pelletization and subsequently are treated or supplemented in the still hot state by liquid additions.

2. Method according to Claim 1, **characterized in that** the reconditioned and moistened pellets which, in particular, are fattened up with fat and/or enzymes are dried and cooled.

3. Method according to Claim 1 or 2, **characterized in that** reconditioning and moistening take place in each case in heatable containers.

4. Method according to at least one of Claims 1 to 3, **characterized in that** reconditioning and moistening take place at least while maintaining the temperature of the pellets which they have as they leave the pellet press (5).

5. Method according to at least one of Claims 1 to 4, **characterized in that** the moistening of the pellets takes place during a mixing operation.

6. Apparatus for the production of feedstuffs, in particular of pelletized feedstuffs, which is suitable for carrying out a method according to Claims 1 to 5, with a pellet press (5) which is preceded by at least a metering device (2) and a conditioner and which is followed by a dryer and a cooler, **characterized in that** the pellet press (5) is followed by a secondary container (6) and a mixer (7).

7. Apparatus according to Claim 6, **characterized in that** the secondary container (6) and the mixer (7) are heatable.

8. Apparatus according to Claim 6 or 7, **characterized in that** the mixer (7) is designed for the addition of liquids and/or for drying the pellets.

9. Apparatus according to at least one of Claims 6 to 8, **characterized in that** the mixer (7) is designed as a vacuum mixer or vacuum coater.

## Revendications

1. Procédé de production d'aliments pour animaux, notamment d'aliments pour animaux sous forme de granulés, pour pooles ou cochons, dans lequel les substances de départ, avant la granulation, sont mélangées et conditionnées et les granulés produits sont refroidis, **caractérisé en ce que** les granulés sont reconditionnés, respectivement hygiénisés immédiatement après la granulation, et sont ensuite traités, respectivement complétés, dans l'état encore chaud, par ajouts de liquide.

2. Procédé selon la revendication 1, **caractérisé en ce que** les granulés reconditionnés et humidifiés, notamment engraissés avec des matières grasses et/ou des enzymes, sont séchés et refroidis.

3. Procédé selon la revendication 1 ou 2, **caractérisé en ce que** le reconditionnement et l'humidification s'effectuent à chaque fois dans des récipients chauffables.

4. Procédé selon au moins l'une quelconque des revendications 1 à 3, **caractérisé en ce que** le reconditionnement et l'humidification s'effectuent au moins en conservant la température des granulés qu'ils présentent à la sortie de la presse de granulation (5).

5. Procédé selon au moins l'une quelconque des revendications 1 à 4, **caractérisé en ce que** l'humidification des granulés s'effectue pendant une opération de mélange.

6. Dispositif de production d'aliments pour animaux, notamment d'aliments pour animaux sous forme de granulés, pour la mise en oeuvre d'un procédé selon les revendications 1 à 5, comprenant une presse de granulation (5), qui est montée en aval d'au moins un doseur (2) et un conditionneur, et en amont d'un sécheur et d'un refroidisseur, **caractérisé en ce que** la presse de granulation (5) est suivie d'un récipient postérieur (6) et d'un mélangeur (7).

7. Dispositif selon la revendication 6, **caractérisé en ce que** le récipient postérieur (6) et le mélangeur (7) peuvent être chauffés.

8. Dispositif selon la revendication 6 ou 7, **caractérisé en ce que** le mélangeur (7) est réalisé pour ajouter des liquides et/ou pour sécher les granulés.

9. Dispositif selon au moins l'une quelconque des revendications 6 à 8, **caractérisé en ce que** le mélangeur (7) est réalisé en tant que mélangeur à vide, respectivement enrobeur à vide.
